# EUROPEAN PATENT APPLICATION

(11) **EP 4 512 944 A1**
(43) Date of publication of application: **26.02.2025**
(21) Application number: 24185603.8
(22) Date of filing: 01.07.2024
(51) Int. Cl.: D01D 5/08, D01F 1/04, D01F 1/10, D01F 1/06, D01F 6/90

(54) **FABRICATING METHOD OF HEAT-INSULATING AND UV-RESISTANT FABRIC**

(30) Priority: 31.07.2023 TW 112128697
(71) Applicant: TAIWAN TEXTILE RESEARCH INSTITUTE, New Taipei City (TW)
(72) Inventor: CHIANG, Jo-Cheng, New Taipei City (TW); SUNG, Yi-Ching, New Taipei City (TW)
(74) Representative: Winter, Brandl - Partnerschaft mbB

(57) **Abstract**

A fabricating method of a heat-insulating and UV-resistant fabric includes the following steps. A melt-spinning step is performed on a raw material to form a plurality of fibers, in which the raw material includes a near-infrared reflecting masterbatch, the near-infrared reflecting masterbatch includes a near-infrared reflecting dye, and when a content of the fibers is 100 wt%, a content of the near-infrared reflecting dye is 0.5 wt% to 1.0 wt%. The fibers are weaved to form the heat-insulating and UV-resistant fabric. A post-processing dyeing step is performed on the heat-insulating and UV-resistant fabric.

## Description

### BACKGROUND

### Field of Disclosure

The present disclosure relates to a fabricating method of a fabric, and particularly relates to a fabricating method of a heat-insulating and UV-resistant fabric.

### Description of Related Art

Under the trend of globalization, the textile industry is facing strong competitive pressure. Textile manufacturers must continuously develop new technologies and diversified products in order to face competition around the world.

In recent years, influenced by the greenhouse effect and global warming, the average temperature is constantly rising. Facing the increasingly hot climate, various sunshade fabrics focus more on blocking light and reflecting heat energy to improve the insulation effect and achieve protection. On the other hand, since dark-colored fabrics are the fashion trend nowadays, how to effectively improve the thermal insulation properties of fabrics, especially the thermal insulation properties of dark-colored fabrics, has become an important issue nowadays.

### SUMMARY

The present disclosure provides a fabricating method for a thermal-insulating and UV-resistant fabric. This fabricating method not only endows the fabric with thermal-insulating and UV-resistant properties but also makes it suitable for achieving dark colors through post-treatment dyeing. Compared to traditional methods that use titanium dioxide additives for UV resistance, the present disclosure employs the near-infrared reflecting dye to confer UV resistance to the fabric, enabling it to be dyed with darker colors. This contributes to enhancing the convenience of producing dark-colored fabrics while meeting economic costs.

According to some embodiments of the present disclosure, a fabricating method of a heat-insulating and UV-resistant fabric includes the following steps: performing a melt-spinning process on a raw material to form a plurality of fibers, in which the raw material includes a near-infrared reflecting masterbatch, the near-infrared reflecting masterbatch includes a near-infrared reflecting dye, and when the fibers account for 100 weight percent, the near-infrared reflecting dye is present in an amount of 0.5 weight percent to 1.0 weight percent; performing a weaving process on the fibers to form the heat-insulating and UV-resistant fabric; and performing a post-treatment dyeing process on the heat-insulating and UV-resistant fabric.

In some embodiments of the present disclosure, the raw material includes a UV-resistant masterbatch, the UV-resistant masterbatch includes titanium dioxide, and when the fibers account for 100 weight percent, the titanium dioxide is present in an amount of 0.4 weight percent to 0.6 weight percent.

In some embodiments of the present disclosure, the fibers are single-component fibers.

In some embodiments of the present disclosure, the fabricating method of a heat-insulating and UV-resistant fabric further includes: performing a granulation process on 72 parts by weight to 89 parts by weight of nylon and 10 parts by weight to 25 parts by weight of the titanium dioxide.

In some embodiments of the present disclosure, the post-treatment dyeing process is performed to provide the heat-insulating and UV-resistant fabric with a K/S value of 3.05 to 3.20.

In some embodiments of the present disclosure, before the post-treatment dyeing process, the heat-insulating and UV-resistant fabric has a K/S value of 0.68 to 0.94.

In some embodiments of the present disclosure, the fabricating method of a heat-insulating and UV-resistant fabric further includes: performing a granulation process on 72 parts by weight to 89 parts by weight of nylon and 10 parts by weight to 25 parts by weight of the near-infrared reflecting dye, in which the near-infrared reflecting dye is a titanium antimony nickel yellow dye.

In some embodiments of the present disclosure, the melt-spinning process is performed to provide the fibers with a fiber specification of 39 denier to 41 denier.

In some embodiments of the present disclosure, the post-treatment dyeing process is performed to provide the heat-insulating and UV-resistant fabric with a K/S value of 3.50 to 3.60.

In some embodiments of the present disclosure, before the post-treatment dyeing process, the heat-insulating and UV-resistant fabric has a K/S value of 1.35 to 1.45.

According to the aforementioned embodiments of the present disclosure, the heat-insulating and UV-resistant fabric is prepared using the raw material containing an appropriate amount of near-infrared reflecting dye. This enables the fabric not only to possess heat-insulating and UV-resistant properties but also to be suitable for the subsequent dyeing process to be provided with dark colors.

### DETAILED DESCRIPTION

The present disclosure provides a method for fabricating a heat-insulating and UV-resistant fabric, which is prepared using a raw material containing an appropriate amount of near-infrared reflecting dye. This not only endows the fabric with heat-insulating and UV-resistant properties but also makes it suitable for the subsequent dyeing process to achieve dark colors. Compared to traditional methods using titanium dioxide additives for UV resistance, using near-infrared reflecting dye in the present disclosure not only enhances UV resistance but also facilitates dyeing for darker colors, thus improving the convenience of producing dark fabrics and meeting economic cost considerations. The heat-insulating and UV-resistant fabric disclosed in the present disclosure can be applied in various outdoor textile products such as sunshades, tents, canopies, jackets, and hats which are subjected to high sun exposure.

The method for fabricating the heat-insulating and UV-resistant fabric of the present disclosure includes steps S10-S30. In step S10, a raw material is subjected to a melt-spinning process to form multiple fibers, and an appropriate amount of near-infrared reflecting dye is incorporated in the fibers. In step S20, these fibers are woven to form the heat-insulating and UV-resistant fabric. In step S30, a post-treatment dyeing process is performed on the heat-insulating and UV-resistant fabric. In the following description, each of the above steps will be explained in detail.

Before proceeding with step S10, a raw material containing a near-infrared reflecting masterbatch (also referred to as the first raw material herein) can be prepared. Specifically, the first raw material includes the near-infrared reflecting masterbatch which contains a near-infrared reflecting dye. By adding the near-infrared reflecting dye, fibers and fabrics prepared from the near-infrared reflecting masterbatch not only exhibit near-infrared reflection (heat-insulating) properties but also possess UV resistance. In some embodiments, the near-infrared reflecting dye can be titanium antimony nickel yellow dye, such as V-9415 (product model, purchased from Ferro Corporation). Titanium antimony nickel yellow dye not only exhibits good near-infrared reflection but also has a light color, minimizing its impact on the effect of the subsequent dyeing process. In some embodiments, the near-infrared reflecting masterbatch may further include a carrier. Specifically, the carrier can be polyester (e.g., polyethylene terephthalate, polybutylene terephthalate, or a combination thereof) or nylon (e.g., nylon 6). In some preferred embodiments, the carrier is nylon, which is suitable for acidic dyeing processes, allowing the use of titanium antimony nickel yellow dye for near-infrared reflection.

In some embodiments, a granulation process can be performed on 72 parts by weight to 89 parts by weight of the carrier and 10 parts by weight to 25 parts by weight of the near-infrared reflecting dye to form the near-infrared reflecting masterbatch. For example, the content of the carrier can be 74 parts by weight, 76 parts by weight, 78 parts by weight, 80 parts by weight, 82 parts by weight, 84 parts by weight, 86 parts by weight, or 88 parts by weight, while the content of the near-infrared reflecting dye can be 11 parts by weight, 12 parts by weight, 14 parts by weight, 16 parts by weight, 18 parts by weight, 20 parts by weight, 22 parts by weight, or 24 parts by weight. Specifically, if the content of the carrier is too high and the content of the near-infrared reflecting dye is too low, it may result in fibers and fabrics that only have near-infrared reflecting (heat-insulating) properties but lack adequate UV resistance; if the content of the carrier is too low and the content of near-infrared reflecting dye is too high, fabrics may not be able to achieve deep (dark-colored) dyeing effects through the post-treatment dyeing process. It should be understood that the term "parts by weight" is a unit that expresses "a ratio between two or more ingredients." Specifically, "72 parts by weight to 89 parts by weight of the carrier and 10 parts by weight to 25 parts by weight of the near-infrared reflecting dye" represents that the weight ratio between the carrier and the near-infrared reflecting dye is "72 to 89" : "10 to 25." Additionally, a dispersant can be added during the granulation process to improve the dispersibility of each component. When the dispersant is added, the result of a filter pressure value test using a 40-micrometer mesh shows a result of less than 10 bar/kg, meeting the process requirements. Specifically, the dispersant can be EMS-Griltex^{®}D1556A (product model, purchased from EMS-Griltech Corporation), with a content of 1 part by weight to 3 parts by weight. In some embodiments, a twin-screw extruder can be used for the granulation process, with a screw speed of 240 rpm to 260 rpm and a temperature of 240°C to 260°C.

In some other embodiments, before proceeding with step S10, a raw material containing both near-infrared reflecting masterbatch and UV-resistant masterbatch (also referred to as the second raw material herein) can be prepared. Specifically, the second raw material includes both near-infrared reflecting masterbatch and UV-resistant masterbatch, with the former (i.e., the near-infrared reflecting masterbatch) containing the aforementioned near-infrared reflecting dye and the latter (i.e., the UV-resistant masterbatch) containing titanium dioxide. By further adding titanium dioxide, fibers and fabrics prepared from the second raw material exhibit superior UV resistance. In some embodiments, titanium dioxide can be TITANIUM DIOXIDE (product model, purchased from Kafrit Industries (1993) Ltd.). In some embodiments, the UV-resistant masterbatch may further include a carrier. Specifically, the carrier can be polyester (e.g., polyethylene terephthalate, polybutylene terephthalate, or a combination thereof) or nylon (e.g., nylon 6). In some preferred embodiments, both the carrier in the UV-resistant masterbatch and the carrier in the near-infrared reflecting masterbatch are nylon, thereby improving the compatibility of the UV-resistant masterbatch and the near-infrared reflecting masterbatch, ensuring the homogeneity of the resulting fibers, and enhancing the application, dyeing uniformity, and recyclability of the fibers.

In some embodiments, a granulation process can be performed on 72 parts by weight to 89 parts by weight of the carrier and 10 parts by weight to 25 parts by weight of titanium dioxide to form a UV-resistant masterbatch. For example, the content of the carrier can be 74 parts by weight, 76 parts by weight, 78 parts by weight, 80 parts by weight, 82 parts by weight, 84 parts by weight, 86 parts by weight, or 88 parts by weight, while the content of titanium dioxide can be 12 parts by weight, 14 parts by weight, 16 parts by weight, 18 parts by weight, 20 parts by weight, 22 parts by weight, or 24 parts by weight. If the content of the carrier is too high and the content of titanium dioxide is too low, fibers and fabrics may not be able to provide better UV resistance; if the content of the carrier is too low and the content of titanium dioxide is too high, titanium dioxide molecules easily fill the pores in fabrics, which makes it difficult for the colorant to be effectively embedded into fabrics, making it impossible for fabrics to achieve dark-colored dyeing through post-treatment dyeing. Additionally, a dispersant can be added during the granulation process to improve the dispersibility of each component. When the dispersant is added, the result of a filter pressure value test using a 40-micrometer mesh shows a result of less than 10 bar/kg, meeting the process requirements. Specifically, the dispersant can be EMS-Griltex^{®} D1556A (product model, purchased from EMS-Griltech Corporation), with a content of 1 part by weight to 3 parts by weight. In some embodiments, a twin-screw extruder can be used for the granulation process, with a screw speed of 240 rpm to 260 rpm and a temperature of 240°C to 260°C.

After completing the above steps, the first raw material containing the near-infrared reflecting masterbatch and the second raw material containing both the near-infrared reflecting masterbatch and the UV-resistant masterbatch can be obtained. Subsequently, further steps can be taken to obtain fibers and heat-insulating and UV-resistant fabrics made from the first raw material or the second raw material.

In step S10, the first raw material undergoes a melt-spinning process to form multiple fibers, in which the first raw material includes the near-infrared reflecting masterbatch containing the near-infrared reflecting dye. In other words, the present disclosure involves performing a melt-spinning process on the masterbatch containing the near-infrared reflecting dye to form multiple fibers. During the melt-spinning process, adjusting the ratio of near-infrared reflecting dye in the fibers can be achieved by adding powder such as polyester (polyethylene terephthalate, polybutylene terephthalate, or a combination thereof) or nylon (nylon 6). Specifically, when the fibers account for 100 weight percent (wt%), the near-infrared reflecting dye is present in an amount of 0.5 wt% to 1.0 wt% (e.g., 0.6 wt%, 0.7 wt%, 0.8 wt%, or 0.9 wt%). Controlling the ratio of near-infrared reflecting dye in the fibers ensures that the fibers and subsequent fabrics possess both heat-insulating and UV-resistant properties, and it ensures the suitability of fabrics for the subsequent dyeing process to achieve dark colors. Specifically, if the ratio of near-infrared reflecting dye in the fibers is less than 0.5 weight percent, fibers and fabrics may only exhibit near-infrared reflection (heat-insulating) properties without sufficient UV resistance; if the ratio exceeds 1.0 weight percent, fabrics may not achieve dark-colored dyeing through the subsequent dyeing process.

In some alternative embodiments of step S10, the second raw material undergoes a melt-spinning process, in which the second raw material includes both the near-infrared reflecting masterbatch and the UV-resistant masterbatch, with the former containing the near-infrared reflecting dye and the latter containing titanium dioxide. In other words, the present disclosure involves performing a melt-spinning process on the near-infrared reflecting masterbatch and UV-resistant masterbatch, which are evenly mixed, to form multiple fibers. Similarly, during the melt-spinning process, adjusting the ratio of near-infrared reflecting dye and titanium dioxide in the fibers can be achieved by adding powder such as polyester or nylon. Specifically, when the fibers account for 100 weight percent (wt%), the near-infrared reflecting dye is present in an amount of 0.5 wt% to 1.0 wt% (e.g., 0.6 wt%, 0.7 wt%, 0.8 wt%, or 0.9 wt%), and the titanium dioxide is present in an amount of 0.4 wt% to 0.6 wt% (e.g., 0.45 wt%, 0.50 wt%, 0.55 wt%). Controlling the ratio of titanium dioxide in the fibers enhances the UV resistance of the fibers and subsequent fabrics and ensures the suitability of fabrics for the subsequent dyeing process to achieve dark colors. Specifically, if the ratio of titanium dioxide in the fibers is less than 0.4 weight percent, the effect of further enhancing the UV resistance of the fibers is limited; if the ratio exceeds 0.6 weight percent, the molecules of titanium dioxide may fill the pores in fabrics, making it difficult for the dye to effectively penetrate during the subsequent post-treatment dyeing process, which easily leads to failure of dark-colored dyeing of the fabrics.

In some embodiments, the spinning temperature of the melt-spinning process can be 250°C to 270°C, and the spinning speed can be 3000 meters per minute (m/min) to 3500 meters per minute. In some embodiments, the fibers produced by the melt-spinning process can be single-component fibers, meaning that the near-infrared reflecting dye (and titanium dioxide) can be uniformly dispersed in the carrier and powder of a single material. Designing fibers with a single-component allows for more uniform distribution of near-infrared reflecting dye and titanium dioxide in a single fiber, ensuring that each surface of the fiber exhibits similar heat-insulating and UV-resistant properties, regardless of the weaving method used subsequently. Additionally, this design is advantageous for recycling and environmentally friendly practices. On the other hand, compared to composite fibers, single-component fibers can overcome issues of uneven dyeing, thereby achieving excellent dyeing uniformity. In some preferred embodiments, the base material (e.g., carrier and powder) in the single-component fibers can all be nylon 6.

In some embodiments, the fibers produced by the melt-spinning process can have fiber specifications ranging from 39 denier to 41 denier. Specifically, the formation of fine-denier fibers with the above specifications is beneficial in responding to the current market trend of refinement and light weighting in sports and outdoor products. On the other hand, the near-infrared reflecting dye and titanium dioxide disclosed herein can be ground into fine powder before granulation, in which the fine powder of near-infrared reflecting dye and titanium dioxide can each have a particle size ranging from 200 nanometers (nm) to 1000 nanometers, this particle size range helps to enhance the dispersibility of the fine powder of near-infrared reflecting dye and titanium dioxide in the fibers, thereby contributing to the formation of fine-denier fibers.

In step S20, fibers are woven to form heat-insulating and UV-resistant fabrics. Specifically, the fibers can be woven into knitted or woven fabrics (e.g., plain weave fabrics). In some embodiments, when the fabric is a woven fabric, the warp density of the fabric can be 190 ends/10 cm to 210 ends/10 cm, and the weft density can be 90 ends/10 cm to 110 ends/10 cm, further enhancing the heat-insulating effect. Upon completion of step S20, the heat-insulating and UV-resistant fabric with heat-insulating and UV-resistant properties is obtained, and the color of the heat-insulating and UV-resistant fabrics has a K/S value of 0.68 to 1.45. In other words, the heat-insulating and UV-resistant fabrics formed at this stage have relatively light and bright colors.

In step S30, post-treatment dyeing process is performed on the heat-insulating and UV-resistant fabric. Specifically, to meet the current fashion trend of dark-colored fabrics, post-treatment dyeing process is performed on the heat-insulating and UV-resistant fabric to endow them with dark colors. In some embodiments, the heat-insulating and UV-resistant fabrics are placed in a dye bath (using 20 grams of dye liquor per gram of heat-insulating and UV-resistant fabric), heated at a rate of 1°C/minute to 100°C, held at a constant temperature for 40 minutes, then cooled at a rate of 1°C/minute to 70°C, thereby completing the post-treatment dyeing process. After the post-treatment dyeing process, the heat-insulating and UV-resistant fabrics with dark colors and heat-insulating and UV-resistant properties are obtained. Specifically, the post-treatment dyeing process can darken the color of the heat-insulating and UV-resistant fabrics to a K/S value of 3.05 to 3.60.

It should be understood that traditional methods for preparing fabrics with heat-insulating and UV-resistant properties often involve using materials that make the fabrics difficult to dye to dark colors through the post-treatment dyeing process. Therefore, dope-dyeing is often used to give fabrics with heat-insulating and UV-resistant properties dark colors. However, this approach requires additional mixing of colored masterbatch with spinning raw materials during the fiber preparation process (spinning process), and the color of the fibers spun after spinning must match the color of the masterbatch, and if the desired color is not the three primary color, masterbatch of the desired color must be prepared in advance, making the process more cumbersome. Moreover, after the high-temperature spinning process, color deviation may occur, leading to a deviation between the color of the final fiber and the expected color. In contrast, the disclosure herein enables the preparation of materials for fabric production to include suitable and appropriate amounts of near-infrared reflecting dye (and titanium dioxide), making the fabric suitable for post-treatment dyeing process to give dark colors, which is more convenient and cost-effective for mass production.

In the following descriptions, various comparative examples and embodiments will be listed for testing and evaluation to verify the efficacy of the present disclosure. It should be understood that the present disclosure should not be limited by the embodiments described below. The composition of the fiber in the heat-insulating and UV-resistant fabric of each embodiment, the composition of the fiber in the fabric of each comparative example, and the proportion of each component in the fiber of each embodiment and each comparative example are shown in Table 1. The heat-insulating and UV-resistant fabrics of Embodiments 1-3 are prepared through steps S10-S20 described above, in which in the granulation process, the carrier is nylon 6, the screw speed is 250 rpm, and the granulation temperature is 250°C; in the melt-spinning process, the powder is nylon 6, the melt-spinning temperature is 250°C, and the spinning speed is 3500 meters per minute; the resulting fibers are single-component fibers with a fiber specification of 40 denier; and the woven fabric is a plain weave with a specification of 40d/12f. The heat-insulating and UV-resistant fabrics of Embodiments 4-6 are the heat-insulating and UV-resistant fabrics of Embodiments 1-3 after post-treatment dyeing in step S30 described above. Comparative Example 1 is a plain weave fabric (fabric specification: 40d/12f) made of bright nylon 6 fibers. Comparative Example 2 is a plain weave fabric (fabric specification: 40d/12f) made of semi-dull nylon 6 fibers. Fabrics of Comparative Examples 3-4 are fabrics obtained by mixing titanium dioxide with nylon 6 and granulating them into masterbatch, then mixing the masterbatch with nylon 6 and melt-spinning them into 40 denier fibers, then weaving the fibers into plain weave fabrics with a specification of 40d/12f, in which in the granulation process, the screw speed is 250 rpm, and the granulation temperature is 250°C; in the melt-spinning process, the melt-spinning temperature is 250°C, and the spinning speed is 3500 meters per minute. The fabrics of Comparative Examples 5-6 are the fabrics of Comparative Examples 3-4 after post-treatment dyeing in step S30 described above.

**Table 1**

| | Near-infrared reflecting dye (titanium antimony nickel yellow dye) | Titanium Dioxide |
|---|---|---|
| Comparative Example 1 | N/A | |
| Comparative Example 2 | N/A | |
| Comparative Example 3 | N/A | 1.0 wt% |
| Comparative Example 5 | Comparative Example 3 after dyeing | |
| Comparative Example 4 | N/A | 1.5 wt% |
| Comparative Example 6 | Comparative Example 4 after dyeing | |
| Embodiment 1 | 0.75 wt% | 0.5 wt% |
| Embodiment 4 | Embodiment 1 after dyeing | |
| Embodiment 2 | 0.75 wt% | 0.5 wt% |
| Embodiment 5 | Embodiment 2 after dyeing | |
| Embodiment 3 | 1 wt% | N/A |
| Embodiment 6 | Embodiment 3 after dyeing | |

### <Experiment 1: Thermal Insulation Test of Fabrics - Temperature behind the Fabrics>

In this experiment, a 120-watt infrared lamp is used to irradiate the front surface of the fabric at a vertical distance of 30 centimeters from the front surface of the fabric for 1 minute, and the temperature behind the fabric (i.e., temperature at the back surface of the fabric) is measured using a heat-sensitive resistance probe on a thermal insulation film temperature tester (product model: LS300, purchased from Linshang Technology Co., Ltd.). The results are shown in Table 2.

**Table 2**

| | Initial Temperature behind Fabric T1 (°C) | Temperature behind Fabric after Irradiation T2 (°C) | Temperature Difference T2-T1 (°C) |
|---|---|---|---|
| Comparative Example 1 | 25.0 | 44.0 | 19.0 |
| Comparative Example 2 | 25.0 | 43.9 | 18.9 |
| Comparative Example 3 | 25.0 | 42.5 | 17.5 |
| Comparative Example 5 | 25.0 | 42.7 | 17.7 |
| Comparative Example 4 | 24.7 | 42.5 | 17.8 |
| Comparative Example 6 | 24.7 | 42.6 | 17.9 |
| Embodiment 1 | 24.3 | 41.8 | 17.5 |
| Embodiment 4 | 24.3 | 42.0 | 17.7 |
| Embodiment 2 | 24.1 | 41.6 | 17.5 |
| Embodiment 5 | 24.1 | 41.5 | 17.4 |
| Embodiment 3 | 24.7 | 41.6 | 16.9 |
| Embodiment 6 | 24.7 | 41.7 | 17.0 |

From the results in Table 2, it can be observed that the temperature difference in each embodiment are less than or equal to the temperature difference in each comparative example, indicating that the thermal-insulating and UV-resistant fabrics of the present disclosure exhibit better thermal insulation effects. Furthermore, based on Embodiments 1-3 and Embodiments 4-6, it can be seen that as the proportion of the near-infrared reflecting dye increases, the thermal insulation effect improves. Additionally, dyeing the fabric does not have a significant impact on its thermal insulation effect.

### <Experiment 2: Thermal Insulation Test of Fabrics - Temperature at the Front Surface of the Fabrics>

In this experiment, a 500-watt halogen lamp was used to irradiate the front surface of the fabric at a vertical distance of 100 centimeters for 10 minutes, and the temperature of the front surface of the fabric was measured using a heat-sensitive resistor probe on a thermal insulation tester (Product Model: LS300, purchased from Linshang Technology Co., Ltd.). The results are shown in Table 3.

**Table 3**

| | Initial Temperature at the Front Surface of Fabric T3 (°C) | Temperature at the Front Surface of Fabric after Irradiation T4 (°C) | Temperature Difference T4-T3 (°C) |
|---|---|---|---|
| Comparative Example 1 | 24.60 | 31.80 | 7.20 |
| Comparative Example 2 | 24.80 | 32.22 | 7.42 |
| Comparative Example 3 | 24.45 | 32.25 | 7.80 |
| Comparative Example 5 | 24.65 | 32.56 | 7.91 |
| Comparative Example 4 | 25.36 | 32.24 | 7.88 |
| Comparative Example 6 | 25.16 | 33.18 | 8.02 |
| Embodiment 1 | 26.87 | 32.72 | 5.85 |
| Embodiment 4 | 25.51 | 31.71 | 6.20 |
| Embodiment 2 | 25.66 | 31.37 | 5.71 |
| Embodiment 5 | 25.57 | 31.73 | 6.16 |
| Embodiment 3 | 26.30 | 31.89 | 5.59 |
| Embodiment 6 | 25.22 | 31.21 | 5.99 |

From the results in Table 3, it can be observed that the temperature difference of each embodiment are smaller than the temperature difference of each comparative example, indicating that the disclosed thermal-insulating and UV-resistant fabric exhibits better thermal insulation effects. Furthermore, comparing Examples 3-4 with Embodiments 1-2, the combination of near-infrared reflecting dye and titanium dioxide can improve the problem of insufficient reflection in the titanium dioxide band, thereby achieving the effect of thermal insulation and cooling. Additionally, considering Embodiments 1-3 and Embodiments 4-6, when the proportion of near-infrared reflecting dye increases, the thermal insulation effect accordingly enhances.

### <Experiment 3: Ultraviolet Protection Test of Fabrics>

In this experiment, the ultraviolet protection factor (UPF) of the fabric was measured using the AATCC183-2010 standard method. The results are shown in Table 4.

**Table 4**

| | Ultraviolet Protection Factor (UPF) |
|---|---|
| Comparative Example 1 | 7 |
| Comparative Example 2 | 28 |
| Comparative Example 3 | 500 |
| Comparative Example 4 | 500 |
| Embodiment 1 | 151 |
| Embodiment 2 | 283 |
| Embodiment 3 | 234 |

From the results in Table 4, it can be observed that Comparative Examples 1-2 has a significantly lower ultraviolet protection factor (UPF) due to the absence of any UV-resistant materials. Comparative Examples 3-4, containing more than 1.0 wt% titanium dioxide, exhibits a UPF of 500 (the detection limit of the instrument). However, as demonstrated in the Experiment 1-2 above and the Experiment 4 below, Comparative Examples 3-4 lack sufficient thermal insulation properties and cannot achieve dark-color dyeing. The results of Embodiments 1-2 show that increasing the content of near-infrared reflecting dye corresponds to an increase in UPF. Similarly, the results of Embodiments 2-3 indicate that adding titanium dioxide corresponds to an increase in UPF. Overall, adding an appropriate amount of titanium dioxide helps improve the fabric's UV resistance performance while ensuring dark-color dyeing capability.

### <Experiment 4: Post-treatment dyeing Test of Fabrics>

In this experiment, the La*b* values and K/S values of the fabrics in the color space were measured using a colorimeter. The results are shown in Table 5.

**Table 5**

| | L | a* | b* | K/S |
|---|---|---|---|---|
| Comparative Example 4 | 82.92 | -0.49 | 0.67 | 0.14 |
| Comparative Example 6 | 52.22 | 5.343 | 0.55 | 1.48 |
| Embodiment 1 | 88.10 | -5.26 | 20.44 | 0.68 |
| Embodiment 4 | 47.9 | 5.44 | 6.52 | 3.05 |
| Embodiment 2 | 86.14 | -6.25 | 22.28 | 0.94 |
| Embodiment 5 | 48.53 | 5.16 | 7.45 | 3.20 |
| Embodiment 3 | 81.97 | -6.00 | 23.68 | 1.40 |
| Embodiment 6 | 48.92 | 4.56 | 8.73 | 3.57 |

From the results in Table 5, it can be observed that before post-treatment dyeing, both comparative examples and embodiments have relatively low K/S values. However, after post-treatment dyeing, the K/S values of the fabrics significantly increased. This indicates that the disclosed thermal-insulating and UV-resistant fabrics, like other untreated fabrics, can undergo post-treatment dyeing and achieve dark-color dyeing effects. On the other hand, from Comparative Example 6 and Embodiments 4-6, it can be observed that when the proportion of titanium dioxide decreases, the fabric can achieve dark colors after dyeing. This suggests that excessive titanium dioxide can easily clog the fabric's pores, making it difficult for dyes to penetrate effectively. Overall, in the present disclosure, when the fibers in the fabric are made from the first raw material (containing near-infrared reflecting masterbatch but not UV-resistant masterbatch), the color of the thermal-insulating and UV-resistant fabric before post-treatment dyeing has K/S values ranging from 1.35 to 1.45, while after post-treatment dyeing, the color of the thermal-insulating and UV-resistant fabric has K/S values ranging from 3.50 to 3.60; when the fibers in the fabric are made from the second raw material (containing near-infrared reflecting masterbatch and UV-resistant masterbatch), the color of the thermal-insulating and UV-resistant fabric before post-treatment dyeing has K/S values ranging from 0.68 to 0.94, while after post-treatment dyeing, the color of the thermal-insulating and UV-resistant fabric has K/S values ranging from 3.05 to 3.20.

### <Experiment 5: Dyeing Uniformity Test of Fabrics>

In this experiment, the thermal-insulating and UV-resistant fabrics of Embodiments 4-6 (i.e., fabrics after dyeing) were cut into 1-yard fabric samples. K/S values of 8 points each on the front and back surfaces of the fabric sample (a total of 16 points) were measured, and the average value E1 of the 8 K/S values on the front surface and the average value E2 of the 8 K/S values on the back surface were calculated. The absolute difference value ΔE between the average values E1 and E2 was then calculated. The results show that ΔE is consistently 0.16, indicating that the thermal-insulating and UV-resistant fabrics of the present disclosure exhibit low color differences after the post-treatment dyeing process, demonstrating a high degree of color uniformity.

According to the aforementioned embodiments of the present disclosure, the heat-insulating and UV-resistant fabric is prepared using the raw material containing an appropriate amount of near-infrared reflecting dye. This enables the fabric not only to possess heat-insulating and UV-resistant properties but also to be suitable for the subsequent dyeing process to be provided with dark colors. Compared to traditional methods using titanium dioxide additives for UV resistance, using near-infrared reflecting dye according to the present disclosure not only provides UV resistance but also allows the fabrics to be dyed with darker colors, enhancing the convenience of producing dark-colored fabrics and meeting economic costs. Additionally, adding an appropriate amount of titanium dioxide helps improve the fabric's UV resistance while ensuring dark-color dyeing capability. Furthermore, making the fibers into a single-component form can overcome uneven dyeing problems, achieving excellent dyeing effects. Moreover, making the fibers into finer denier specifications can respond to the market trend of refinement and light weighting in sports and outdoor products.

## Claims

1. A fabricating method of a heat-insulating and UV-resistant fabric, **characterized by** comprising:
performing a melt-spinning process on a raw material to form a plurality of fibers, wherein the raw material comprises a near-infrared reflecting masterbatch, the near-infrared reflecting masterbatch comprises a near-infrared reflecting dye, and when the fibers account for 100 weight percent, the near-infrared reflecting dye is present in an amount of 0.5 weight percent to 1.0 weight percent;
performing a weaving process on the fibers to form the heat-insulating and UV-resistant fabric; and
performing a post-treatment dyeing process on the heat-insulating and UV-resistant fabric.

2. The fabricating method of a heat-insulating and UV-resistant fabric of claim 1, **characterized in that** the raw material comprises a UV-resistant masterbatch, the UV-resistant masterbatch comprises titanium dioxide, and when the fibers account for 100 weight percent, the titanium dioxide is present in an amount of 0.4 weight percent to 0.6 weight percent.

3. The fabricating method of a heat-insulating and UV-resistant fabric of claim 2, **characterized in that** the fibers are single-component fibers.

4. The fabricating method of a heat-insulating and UV-resistant fabric of any one of claims 2 to 3, **characterized by** further comprising:
performing a granulation process on 72 parts by weight to 89 parts by weight of nylon and 10 parts by weight to 25 parts by weight of the titanium dioxide.

5. The fabricating method of a heat-insulating and UV-resistant fabric of any one of claims 2 to 4, **characterized in that** the post-treatment dyeing process is performed to provide the heat-insulating and UV-resistant fabric with a K/S value of 3.05 to 3.20.

6. The fabricating method of a heat-insulating and UV-resistant fabric of any one of claims 2 to 5, **characterized in that** before the post-treatment dyeing process, the heat-insulating and UV-resistant fabric has a K/S value of 0.68 to 0.94.

7. The fabricating method of a heat-insulating and UV-resistant fabric of any one of claims 1 to 6, **characterized by** further comprising:
performing a granulation process on 72 parts by weight to 89 parts by weight of nylon and 10 parts by weight to 25 parts by weight of the near-infrared reflecting dye, wherein the near-infrared reflecting dye is a titanium antimony nickel yellow dye.

8. The fabricating method of a heat-insulating and UV-resistant fabric of any one of claims 1 to 7, **characterized in that** the melt-spinning process is performed to provide the fibers with a fiber specification of 39 denier to 41 denier.

9. The fabricating method of a heat-insulating and UV-resistant fabric of any one of claims 1, 7 and 8, **characterized in that** the post-treatment dyeing process is performed to provide the heat-insulating and UV-resistant fabric with a K/S value of 3.50 to 3.60.

10. The fabricating method of a heat-insulating and UV-resistant fabric of any one of claims 1, 7, 8, and 9, wherein before the post-treatment dyeing process, the heat-insulating and UV-resistant fabric has a K/S value of 1.35 to 1.45.
